# FASCICULE DE BREVET EUROPEEN

(11) **EP 3 296 146 B1**
(45) Date de publication et mention de la délivrance du brevet: **28.04.2021**
(21) Numéro de dépôt: 17191367.6
(22) Date de dépôt: 15.09.2017
(51) Int. Cl.: B60L 53/00

(54) **DISPOSITIF DE GESTION D'ÉNERGIE DANS DES VÉHICULES FERROVIAIRES**
ENERGIEMANAGEMENTVORRICHTUNG IN SCHIENENFAHRZEUGEN
AN ENERGY MANAGEMENT DEVICE FOR RAILWAY VEHICLES

(30) Priorité: 15.09.2016 FR 1658625
(43) Date de publication de la demande: 21.03.2018
(73) Titulaire: ALSTOM Transport Technologies, 93400 Saint-Ouen (FR)
(72) Inventeur: MUSSET, Sébastien, 17220 Sainte Soulle (FR); VIENNE, Mathieu, 17000 La Rochelle (FR)
(74) Mandataire: Lavoix

(56) Documents cités:
- WO-A1-2015/043967
- WO-A2-2015/110669

## Description

La présente invention concerne un système de gestion d'énergie dans des véhicules ferroviaires circulant sur un réseau de transport ferroviaire.

Les documents WO 2015/110669 et WO 2015/043967 décrivent des exemples de dispositifs de gestion d'énergie de l'état de la technique.

L'invention concerne la gestion d'énergie sur un réseau de transport ferroviaire comportant une pluralité de stations de rechargement réparties de manière discrète sur le réseau de transport ferroviaire.

Dans un tel réseau, chaque véhicule ferroviaire comporte des moyens limités de stockage d'énergie, qui sont rechargés à chaque passage à une station de rechargement. L'énergie ainsi stockée permet au véhicule de se déplacer jusqu'à la station de rechargement suivante.

Il est à noter que les moyens de stockage d'énergie du véhicule présentent un faible dimensionnement, afin d'optimiser leurs poids et encombrement. En outre, le temps de rechargement en station est limité, et correspond généralement au temps de montée et de descente de passagers durant cet arrêt. Il en résulte que l'énergie stockée dans les moyens de stockage est uniquement suffisante pour que le véhicule se déplace jusqu'à la station de rechargement suivante.

Ainsi, lorsqu'une station de rechargement est défectueuse, ne permettant pas le rechargement du véhicule, celui-ci peut difficilement atteindre la station de rechargement suivante, voire ne dispose pas suffisamment d'énergie pour atteindre cette station de rechargement suivante. Dans tous les cas, une telle station de rechargement défectueuse entraîne généralement des perturbations du trafic sur le réseau de transport, voire un blocage d'exploitation.

Il est possible de remédier à cet inconvénient en équipant le véhicule de moyens de stockage d'énergie de secours, mais une telle solution n'est pas souhaitable car de tels moyens de stockage de secours forment une charge supplémentaire volumineuse et lourde pour le véhicule.

L'invention a notamment pour but de remédier à cet inconvénient en fournissant un système de gestion d'énergie permettant à un véhicule ferroviaire d'atteindre aisément une station de rechargement faisant suite à une station défectueuse, et cela sans nécessiter de porter des moyens de stockage d'énergie supplémentaires.

A cet effet, l'invention a notamment pour objet un système de gestion d'énergie selon la revendication 1.

Le système de gestion selon l'invention permet d'anticiper la connaissance de l'état de la station de rechargement suivante, suffisamment à l'avance pour adapter la gestion de l'énergie dans le véhicule afin d'atteindre la station de rechargement en état de fonctionnement suivante.

Dans l'état de la technique, un état défectueux d'une station de rechargement n'était connu qu'au moment où le véhicule se trouvait à cette station, trop tard pour permettre une adaptation efficace de la gestion d'énergie.

Un système de gestion d'énergie selon l'invention peut comporter l'une ou plusieurs des caractéristiques suivantes, prises seules ou selon toutes combinaisons techniquement envisageable.
- Les moyens d'analyse sont agencés dans une station de supervision au sol, et communiquent avec le véhicule ferroviaire via les moyens de transfert.
- Les moyens d'adaptation sont embarqués dans le véhicule ferroviaire.
- Les moyens de transfert comportent : un récepteur à chaque station de rechargement, les moyens de transfert étant configurés pour transmettre à chaque station de rechargement l'information d'état de la station de rechargement adjacente suivante dans le sens de déplacement du véhicule, et des moyens de communication entre le véhicule ferroviaire et la station de rechargement à laquelle stationne le véhicule ferroviaire, configurés pour transmettre au véhicule ladite information d'état de la station de rechargement adjacente suivante.
- Les moyens d'adaptation sont configurés pour commander une réduction de la consommation d'énergie dans au moins un équipement électrique.
- Les moyens d'adaptation sont configurés pour réduire la consommation des équipements électriques en effectuant une action choisie parmi : la réduction d'effort d'un ou plusieurs moteurs électriques du véhicule, la modification du fonctionnement d'équipements de climatisation en salle et/ou en cabine, la modification du fonctionnement d'éclairages intérieurs du véhicule.

L'invention concerne également un procédé de gestion d'énergie dans un véhicule ferroviaire circulant sur un réseau de transport ferroviaire comprenant une pluralité de stations de rechargement pour le rechargement en énergie du véhicule ferroviaire, les stations de rechargement étant réparties de manière discrète sur le réseau de transport ferroviaire, caractérisé en ce qu'il comporte :
- une analyse de l'état de chaque station de rechargement, de manière à fournir une information d'état de chaque station de rechargement, selon laquelle la station de rechargement est défectueuse ou en état de fonctionnement,
- un transfert, vers le véhicule ferroviaire, de l'information d'état d'au moins la station de rechargement suivante la plus proche de ce véhicule dans un sens de déplacement de ce véhicule,
- une adaptation de la gestion de l'énergie dans le véhicule ferroviaire, en fonction de l'état de ladite station de rechargement suivante la plus proche, de manière à réduire la consommation d'énergie dans le véhicule ferroviaire lorsque cette station de rechargement suivante est défectueuse.

L'invention concerne enfin un réseau de transport ferroviaire sur lequel circule au moins un véhicule ferroviaire, comportant une pluralité de stations de rechargement pour le rechargement en énergie du véhicule ferroviaire, les stations de rechargement étant réparties de manière discrète sur le réseau de transport ferroviaire, caractérisé en ce qu'il comporte un système de gestion d'énergie tel que défini précédemment.

L'invention sera mieux comprise à la lecture de la description qui va suivre, donnée uniquement à titre d'exemple et faite en se référant aux figures annexées, parmi lesquelles :
- la figure 1 représente schématiquement un réseau de transport ferroviaire comprenant un système de gestion selon un exemple de mode de réalisation de l'invention ; et
- la figure 2 est un graphique représentant l'évolution de l'énergie stockée dans le véhicule, comparant un cas nominal où toutes les stations de rechargement fonctionnent, un cas où une station de rechargement est défectueuse dans un réseau de transport de l'état de la technique, et un cas où une station de rechargement est défectueuse dans un réseau de transport comportant un système de gestion selon l'invention.

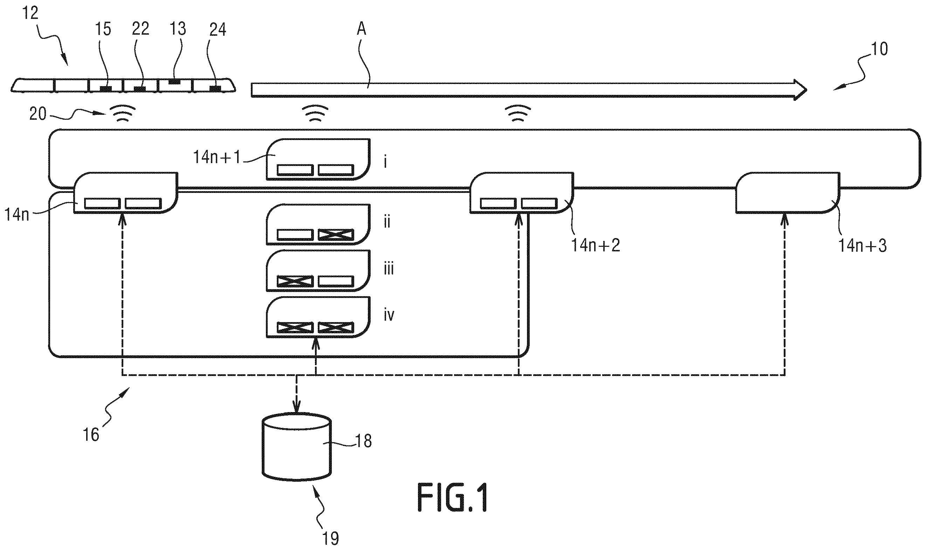

On a représenté sur la figure 1 un réseau 10 de transport ferroviaire. Le réseau de transport 10 comporte une voie ferrée sur laquelle circule au moins un véhicule ferroviaire 12, se déplaçant dans un sens de déplacement représenté par la flèche A.

Le réseau de transport 10 comporte des moyens de rechargement discontinus du véhicule ferroviaire 12. Plus particulièrement, le réseau de transport 10 comporte une pluralité de stations de rechargement 14 réparties le long de la voie ferrée. Dans la description qui va suivre, la station de rechargement à laquelle se trouve le véhicule ferroviaire 12 est appelée première station de rechargement, et désignée par la référence 14ₙ, la station de rechargement adjacente suivante dans le sens de déplacement A est appelée seconde station de rechargement et désignée par la référence 14ₙ₊₁, et celle qui suit est appelée troisième station de rechargement et désignée par la référence 14ₙ₊₂, etc.

Le véhicule ferroviaire 12 comporte de manière classique des moyens de stockage d'énergie 13, et des moyens 15 d'échanges d'énergie avec la station de rechargement 14ₙ à laquelle le véhicule ferroviaire 12 se trouve. Ainsi, le véhicule ferroviaire 12 est propre à récupérer de l'énergie à la station de rechargement 14ₙ, pour la stocker dans ses moyens de stockage 13.

Le réseau de transport 10 selon l'invention est équipé d'un système de gestion d'énergie, désigné par la référence générale 16.

Le système de gestion 16 comporte des moyens 18 d'analyse de l'état de chaque station de rechargement 14, propres à fournir une information d'état de chaque station de rechargement 14, selon laquelle la station de rechargement 14 est défectueuse ou en état de fonctionnement.

Dans l'exemple représenté sur la figure 1, la première station de rechargement 14ₙ et la troisième station de rechargement 14ₙ₊₂ sont chacune en état en état de fonctionnement.

La seconde station de rechargement 14ₙ₊₁ est représentée dans différentes situations i, ii, iii et iv.

Dans la première situation i, la seconde station de rechargement 14ₙ₊₁ est en état de fonctionnement.

Dans les seconde ii et troisième iii situations, la seconde station de rechargement 14ₙ₊₁ est partiellement défectueuse, et apte à ne recharger que partiellement le véhicule ferroviaire 12.

Dans la quatrième situation, la seconde station de rechargement 14ₙ₊₁ est entièrement défectueuse, et incapable de recharger le véhicule ferroviaire 12.

Les moyens d'analyse 18 sont propres à déterminer l'état de chaque station de recharge 14, et notamment, dans l'exemple décrit, si la seconde station de rechargement 14n+1 est dans la première i, seconde ii, troisième iii ou quatrième iv situation.

Les moyens d'analyse 18 sont agencés dans une station de supervision 19 au sol, et communiquent avec le véhicule ferroviaire via des moyens de transfert 20.

Ces moyens d'analyse 18 examinent en continu les stations de recharge 14, pour déterminer en temps réel leurs états. L'homme du métier saura déterminer l'état fonctionnel des stations de recharge 14 par des moyens connus en soi.

Les moyens de transfert 20 sont destinés à transférer, vers le véhicule ferroviaire 12, l'information d'état d'au moins la station de rechargement 14ₙ₊₁ la plus proche de ce véhicule 12 dans le sens de déplacement A.

Par exemple, les moyens de transfert 20 comportent un récepteur à chaque station de rechargement 14, les moyens de transfert 20 étant configurés pour transmettre à chaque station de rechargement 14 l'information d'état de la station de rechargement adjacente dans le sens de déplacement A du véhicule 12.

Ainsi :
- la première station de rechargement 14ₙ reçoit l'information d'état de la seconde station de rechargement 14ₙ₊₁,
- la seconde station de rechargement 14ₙ₊₁ reçoit l'information d'état de la troisième station de rechargement 14ₙ₊₂,
- etc.

Les moyens de transfert 20 comportent des moyens 22 de communication entre le véhicule ferroviaire 12 et la station de rechargement 14ₙ à laquelle stationne le véhicule ferroviaire 12. Ces moyens de communication 22 sont configurés pour transmettre au véhicule 12 ladite information d'état de la station de rechargement adjacente 14ₙ₊₁.

Le système de gestion 16 comporte des moyens 24 d'adaptation de la gestion de l'énergie dans le véhicule ferroviaire 12, en fonction de l'état de ladite station de rechargement la plus proche 14ₙ₊₁. Ces moyens d'adaptation 24 sont propres à réduire la consommation d'énergie dans le véhicule ferroviaire 12 lorsque cette station de rechargement 14ₙ₊₁ est défectueuse, c'est-à-dire partiellement (situation ii et iii) ou entièrement (situation iv) défectueuse.

Les moyens d'adaptation 24 sont avantageusement embarqués dans le véhicule ferroviaire 12.

Ces moyens d'adaptation 24 sont configurés pour commander une réduction de la consommation d'énergie dans au moins un équipement électrique.

Ces adaptations sont réalisées par exemple, en sélectionnant au moins l'une des actions sur les équipements électriques suivant : Réduction d'effort demandé au moteur électrique du véhicule, réduction des performances de confort climatique, réductions des éclairages intérieurs du véhicule.

Ainsi, lorsque la station de rechargement 14ₙ₊₁ est défectueuse, les moyens d'adaptation 24 sont par exemple configurés pour commander une baisse de la vitesse du véhicule ferroviaire 12, en vue d'économiser de l'énergie.

Avantageusement, les moyens d'adaptation 24 sont propres à déterminer l'énergie nécessaire pour atteindre la troisième station 14ₙ₊₂, l'adaptation de la gestion de l'énergie étant effectuée en fonction de cette énergie nécessaire déterminée. Plus particulièrement, les moyens d'adaptation 24 sont configurés pour prendre en compte la distance jusqu'à la troisième station 14ₙ₊₂, ainsi que les caractéristiques du trajet jusqu'à cette troisième station 14ₙ₊₂, notamment la présence de dénivelé, de courbes, etc.

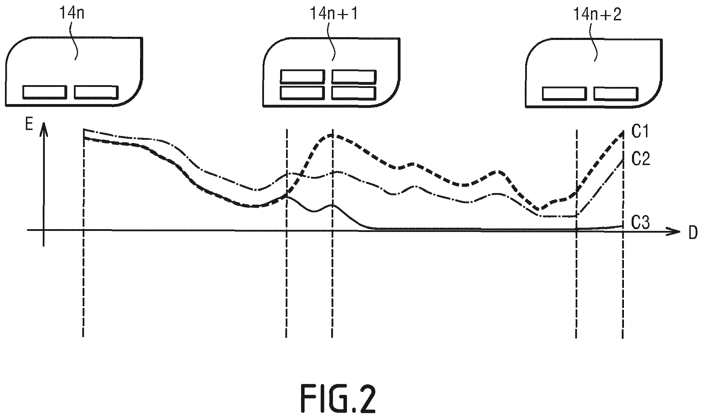

Un procédé de gestion d'énergie dans le véhicule ferroviaire 12, utilisant le système de gestion précédemment décrit, va maintenant être décrit, notamment en référence à la figure 2.

Le procédé de gestion comporte une analyse de l'état de chaque station de rechargement 14, de manière à fournir une information d'état de chaque station de rechargement 14, selon laquelle la station de rechargement est défectueuse ou en état de fonctionnement.

Cette analyse est avantageusement réalisée en continu, par les moyens d'analyse 18.

Le procédé comporte ensuite un transfert, vers le véhicule ferroviaire 12, de l'information d'état d'au moins la station de rechargement 14ₙ₊₁ suivante la plus proche de ce véhicule 12 dans le sens de déplacement A de ce véhicule 12.

Par exemple, une information d'état est envoyée en continu à chaque station de rechargement, concernant l'état de la station de rechargement suivante.

Lorsque le véhicule ferroviaire 12 stationne à une station de rechargement 14ₙ, il est alors averti de l'état de la station de rechargement suivante 14ₙ₊₁.

Le procédé comporte ensuite une adaptation de la gestion de l'énergie dans le véhicule ferroviaire 12, en fonction de l'état de ladite station de rechargement suivante la plus proche 14ₙ₊₁, de manière à réduire la consommation d'énergie dans le véhicule ferroviaire lorsque cette station de rechargement suivante 14ₙ₊₁ est défectueuse.

Cette adaptation de la gestion de l'énergie a pour but de permettre au véhicule ferroviaire 12 d'atteindre au moins la station de rechargement 14ₙ₊₂.

A cet effet, avant le départ de la station de rechargement 14ₙ, l'énergie nécessaire pour rejoindre la station de rechargement 14ₙ₊₂ est stockée dans le véhicule ferroviaire 12. L'énergie fournie à divers équipements électriques embarqués sur le véhicule ferroviaire 12 est réduite. Par exemple, le véhicule ferroviaire 12 diminue sa vitesse afin d'économiser de l'énergie.

Dans la situation i, la seconde station de rechargement 14n+1 est en état de fonctionnement. Le véhicule ferroviaire 12 pourra y être correctement rechargé, et ne nécessite donc pas d'adaptation de la gestion de son énergie.

La consommation d'énergie est alors nominale, représentée par la courbe C1 sur la figure 2. Sur cette figure 2, l'axe des abscisses représente la distance D parcourue par le véhicule, et l'axe des ordonnées la quantité E d'énergie stockée dans les moyens de stockage 13.

Dans la situation ii ou iii, la seconde station de rechargement 14ₙ₊₁ est défectueuse, et plus particulièrement partiellement défectueuse. Le véhicule ferroviaire 12 ne pourra y effectuer qu'un rechargement partiel, et doit donc adapter sa consommation d'énergie à ce fait.

Dans la situation iv, la seconde station de rechargement 14ₙ₊₁ est défectueuse, et plus particulièrement entièrement défectueuse. Le véhicule ferroviaire 12 ne pourra pas y effectuer de rechargement, et doit donc adapter sa consommation d'énergie à ce fait. Dans ce cas, la consommation d'énergie doit être minimale.

La consommation d'énergie adaptée est représentée par la courbe C2 sur la figure 2.

Puisque le véhicule 12 connait l'état de la seconde station de rechargement 14ₙ₊₁ alors qu'il se trouve à la première station de rechargement 14ₙ, il peut dès cette première station 14ₙ adapter sa consommation d'énergie. On constate donc, sur la figure 2, que la consommation d'énergie dans la situation iv (courbe C2) est, dès le départ de la première station 14n, inférieure à la consommation d'énergie nominale dans la situation i (courbe C1).

La courbe C2 montre par ailleurs que le véhicule 12, dans la situation iv, n'est pas rechargé à la seconde station 14ₙ₊₁, contrairement au véhicule dans la situation i, comme le montre la courbe C1.

La courbe C2 montre ensuite que l'énergie du véhicule 12 est économisée de manière à permettre au véhicule 12 d'atteindre la troisième station 14ₙ₊₂.

Cette courbe C2 peut être comparée à une troisième courbe C3, correspondant à la gestion de l'énergie dans l'état de la technique.

Dans l'état de la technique, le véhicule 12 à la première station 14ₙ n'est pas informé de l'état de la seconde station 14ₙ₊₁. Ainsi, entre cette première station 14ₙ et la seconde station 14ₙ₊₁, la gestion d'énergie est similaire à celle en fonctionnement nominal (les courbes C1 et C3 sont sensiblement confondues entre la première station 14ₙ et la seconde station 14ₙ₊₁).

La courbe C3 montre alors que, lorsque le véhicule 12 de l'état de la technique ne peut pas se recharger à la seconde station 14ₙ₊₁, il ne bénéficie pas de suffisamment d'énergie pour atteindre la troisième station 14ₙ₊₂, la quantité d'énergie stockée devenant nulle au cours de son trajet vers cette troisième station 14ₙ₊₂.

Il apparaît donc clairement que l'invention permet de résoudre les problèmes de rechargement liés à une station de rechargement défectueuse.

On notera que l'invention n'est pas limitée au mode de réalisation précédemment décrit, et pourrait présenter diverses variantes sans sortir du cadre des revendications.

Par exemple, on peut prévoir des moyens de transfert configurés pour transmettre au véhicule les informations d'état de toutes les stations de rechargement. Les moyens d'adaptation seront dans ce cas configurés pour ne prendre en compte que la station de rechargement suivante ou avantageusement de toutes les stations de rechargement suivantes.

Par ailleurs, les moyens de transfert pourraient en variante transmettre les informations d'état directement au véhicule. Dans ce cas, le système de gestion comporte des moyens de localisation du véhicule ferroviaire sur la voie ferrée, propres à déterminer la station de rechargement la plus proche du véhicule ferroviaire dans la direction de déplacement de ce véhicule.

## Revendications

1. Système (16) de gestion d'énergie dans au moins un véhicule ferroviaire (12) circulant sur un réseau de transport ferroviaire (10) comprenant une pluralité de stations de rechargement (14) pour le rechargement en énergie du véhicule ferroviaire (12), les stations de rechargement (14) étant réparties de manière discrète sur le réseau de transport ferroviaire (10), le système comprenant :
- des moyens (18) d'analyse de l'état de chaque station de rechargement (14), propres à fournir une information d'état de chaque station de rechargement (14), selon laquelle cette station de rechargement (14) est défectueuse ou en état de fonctionnement,
- des moyens (20) de transfert, vers le véhicule ferroviaire (12), de l'information d'état d'au moins la station de rechargement suivante (14ₙ₊₁) dans un sens de déplacement (A) de ce véhicule (12),
- des moyens (24) d'adaptation de la gestion de l'énergie dans le véhicule ferroviaire (12), en fonction de l'état de ladite station de rechargement suivante (14ₙ₊₁), propres à réduire la consommation d'énergie dans le véhicule ferroviaire (12) lorsque cette station de rechargement suivante (14ₙ₊₁) est défectueuse afin d'atteindre la station de rechargement faisant suite à la station défectueuse.

2. Système de gestion (16) selon la revendication 1, dans lequel les moyens d'analyse (18) sont agencés dans une station de supervision (19) au sol, et communiquent avec le véhicule ferroviaire (12) via les moyens de transfert (20).

3. Système de gestion (16) selon la revendication 1 ou 2, dans lequel les moyens d'adaptation (24) sont embarqués dans le véhicule ferroviaire (12).

4. Système de gestion (16) selon l'une quelconque des revendications 1 à 3, dans lequel les moyens de transfert (20) comportent :
- un récepteur à chaque station de rechargement (14), les moyens de transfert (20) étant configurés pour transmettre à chaque station de rechargement l'information d'état de la station de rechargement adjacente suivante dans le sens de déplacement (A) du véhicule,
- des moyens de communication (22) entre le véhicule ferroviaire (12) et la station de rechargement (14ₙ) à laquelle stationne le véhicule ferroviaire (12), configurés pour transmettre au véhicule (12) ladite information d'état de la station de rechargement adjacente suivante (14ₙ₊₁).

5. Système de gestion (16) selon l'une quelconque des revendications précédentes, dans lequel les moyens d'adaptation (24) sont configurés pour commander une réduction de la consommation d'énergie dans au moins un équipement électrique.

6. Système de gestion (16) selon l'une quelconque des revendications précédentes, dans lequel les moyens d'adaptation (24) sont configurés pour réduire la consommation d'énergie en effectuant une action choisie parmi : la réduction d'effort d'un ou plusieurs moteurs électriques du véhicule, la modification du fonctionnement d'équipements de climatisation en salle et/ou en cabine, la modification du fonctionnement d'éclairages intérieurs du véhicule.

7. Procédé de gestion d'énergie dans un véhicule ferroviaire (12) circulant sur un réseau de transport ferroviaire (10) comprenant une pluralité de stations de rechargement (14) pour le rechargement en énergie du véhicule ferroviaire, les stations de rechargement (14) étant réparties de manière discrète sur le réseau de transport ferroviaire (10), le procédé de gestion d'énergie comportant :
- une analyse de l'état de chaque station de rechargement (14), de manière à fournir une information d'état de chaque station de rechargement (14), selon laquelle la station de rechargement (14) est défectueuse ou en état de fonctionnement,
- un transfert, vers le véhicule ferroviaire (12), de l'information d'état d'au moins la station de rechargement suivante (14ₙ₊₁) dans un sens de déplacement (A) de ce véhicule,
- une adaptation de la gestion de l'énergie dans le véhicule ferroviaire (12), en fonction de l'état de ladite station de rechargement suivante (14ₙ₊₁), de manière à réduire la consommation d'énergie dans le véhicule ferroviaire (12) lorsque cette station de rechargement suivante (14ₙ₊₁) est défecteuse afin d'atteindre la station de rechargement faisant suite à la station défecteuse.

8. Réseau (10) de transport ferroviaire sur lequel circule au moins un véhicule ferroviaire (12), comportant une pluralité de stations de rechargement (14) pour le rechargement en énergie du véhicule ferroviaire (12), les stations de rechargement (14) étant réparties de manière discrète sur le réseau de transport ferroviaire, **caractérisé en ce qu'**il comporte un système de gestion d'énergie (16) selon l'une quelconque des revendications 1 à 6.

## Patentansprüche

1. System (16) zum Energiemanagement in mindestens einem auf einem Schienenverkehrsnetz (10) verkehrenden Schienenfahrzeug (12), das eine Vielzahl von Ladestationen (14) zum Aufladen des Schienenfahrzeugs (12) mit Energie umfasst, wobei die Ladestationen (14) diskret über das Schienenverkehrsnetz (10) verteilt sind, wobei das System umfasst:
- Mittel (18) zum Analysieren des Zustands jeder Ladestation (14), die in der Lage sind, Informationen über den Zustand jeder Ladestation (14) zu liefern, wonach diese Ladestation (14) defekt oder in einem betriebsbereiten Zustand ist,
- Mittel (20) zum Übertragen der Information des Zustands mindestens der nächsten Ladestation (14ₙ₊₁) in einer Fahrtrichtung (A) des Schienenfahrzeugs (12) an dieses Fahrzeug (12),
- Mittel (24) zum Anpassen des Energiemanagements im Schienenfahrzeug (12) abhängig vom Zustand der besagten nächsten Ladestation (14ₙ₊₁), die geeignet sind, den Energieverbrauch im Schienenfahrzeug (12) zu verringern, wenn diese nächste Ladestation (14ₙ₊₁) defekt ist, um die auf die defekte Station folgende Ladestation zu erreichen.

2. Managementsystem (16) nach Anspruch 1, bei dem die Analysemittel (18) in einer Überwachungsstation (19) am Boden angeordnet sind und über Übertragungsmittel (20) mit dem Schienenfahrzeug (12) kommunizieren.

3. Managementsystem (16) nach Anspruch 1 oder 2, bei dem die Anpassungsmittel (24) in dem Schienenfahrzeug (12) mitgeführt sind.

4. Managementsystem (16) nach einem der Ansprüche 1 bis 3, bei dem die Übertragungsmittel (20) aufweisen:
- einen Empfänger an jeder Ladestation (14), wobei die Übertragungsmittel (20) ausgebildet sind, an jede Ladestation die Information des Zustands der in Fahrtrichtung (A) des Fahrzeugs nächsten benachbarten Ladestation zu übertragen,
- Mittel (22) zur Kommunikation zwischen dem Schienenfahrzeug (12) und der Ladestation (14ₙ), an der das Schienenfahrzeug (12) anhält, die ausgebildet sind, an das Fahrzeug (12) die Information des Zustands der nächsten benachbarten Ladestation (14ₙ₊₁) zu übertragen.

5. Managementsystem (16) nach einem der vorangehenden Ansprüche, bei dem die Anpassungsmittel (24) ausgebildet sind, eine Verringerung des Stromverbrauchs in mindestens einem elektrischen Gerät zu steuern.

6. Managementsystem (16) nach einem der vorhergehenden Ansprüche, bei dem die Anpassungsmittel (24) ausgebildet sind, den Stromverbrauch zu verringern, indem sie eine Maßnahme durchführen, die ausgewählt ist aus: Verringern der Belastung eines oder mehrerer Elektromotoren des Fahrzeugs, Modifizieren der Funktionsweise von Raum- und/oder Abteilklimaanlagen, Modifizieren der Funktionsweise von Innenleuchten des Fahrzeugs.

7. Verfahren zum Energiemanagement in einem auf einem Schienenverkehrsnetz (10) verkehrenden Schienenfahrzeug (12), das eine Vielzahl von Ladestationen (14) zum Aufladen des Schienenfahrzeugs mit Energie umfasst, wobei die Ladestationen (14) diskret über das Schienenverkehrsnetz (10) verteilt sind, wobei das Verfahren zum Energiemanagement aufweist:
- Analysieren des Zustands jeder Ladestation (14), um Informationen über den Zustand jeder Ladestation (14) zu liefern, wonach die Ladestation (14) defekt oder in einem betriebsbereiten Zustand ist,
- Übertragen der Information des Zustands mindestens der nächsten Ladestation (14ₙ₊₁) in einer Fahrtrichtung (A) des Schienenfahrzeugs (12) an dieses Fahrzeug,
- Anpassen des Energiemanagements im Schienenfahrzeug (12) abhängig vom Zustand der besagten nächsten Ladestation (14ₙ₊₁), um den Energieverbrauch im Schienenfahrzeug (12) zu verringern, wenn diese nächste Ladestation (14ₙ₊₁) defekt ist, um die auf die defekte Station folgende Ladestation zu erreichen.

8. Schienenverkehrsnetz (10), auf dem mindestens ein Schienenfahrzeug (12) verkehrt, das eine Vielzahl von Ladestationen (14) zum Aufladen des Schienenfahrzeugs (12) mit Energie umfasst, wobei die Ladestationen (14) diskret über das Schienenverkehrsnetz verteilt sind, **dadurch gekennzeichnet, dass** es ein System (16) zum Energiemanagement nach einem der Ansprüche 1 bis 6 umfasst.

## Claims

1. An energy management system (16) in at least one railway vehicle (12) traveling on a railway transport network (10) comprising a plurality of recharging stations (14) for recharging the energy of the railway vehicle (12), the recharging stations (14) being distributed discreetly over the railway transport network (10), the system including:
- means (18) for analyzing the status of each recharging station (14), able to provide status information for each recharging station (14), indicating whether this recharging station (14) is defective or in good working order,
- means (20) for transferring, to the railway vehicle (12), status information at least for the closest subsequent recharging station (14ₙ₊₁) in a direction of travel (A) of this vehicle (12),
- means (24) for adapting the energy management in the railway vehicle (12), based on the status of said closest following recharging station (14ₙ₊₁), able to reduce the energy consumption of the railway vehicle (12) when the following recharging station (14ₙ₊₁) is defective vehicle in order to reach the recharging station next to the defective recharging station.

2. The management system (16) according to claim 1, wherein the analysis means (18) are arranged in a ground supervision station (19), and communicate with the railway vehicle (12) via the transfer means (20).

3. The management system (16) according to claim 1 or 2, wherein the adaptation means (24) are on board the railway vehicle (12).

4. The management system (16) according to any one of claims 1 to 3, wherein the transfer means (20) include:
- a receiver at each recharging station (14), the transfer means (20) being configured to send each recharging station the status information of the next adjacent recharging station in the direction of travel (A) of the vehicle,
- communication means (22) between the railway vehicle (12) and the recharging station (14ₙ) at which the railway vehicle (12) is parked, configured to send the vehicle (12) said status information of the following adjacent recharging station (14ₙ₊₁).

5. The management system (16) according to any one of the preceding claims, wherein the adaptation means (24) are configured to command a reduction in the energy consumption in at least one piece of electrical equipment.

6. The management system (16) according to any one of the preceding claims, wherein the adaptation means (24) are configured to reduce the energy consumption of the electrical equipment by carrying out an action chosen from among: the reduction in force of one or several electric motors of the vehicle, the modification of the operation of air-conditioning equipment in a car and/or cab, the modification of the lighting inside the vehicle.

7. An energy management method in a railway vehicle (12) traveling on a railway transport network (10) comprising a plurality of recharging stations (14) for recharging the energy of the railway vehicle, the recharging stations (14) being distributed discreetly over the railway transport network (10), the energy management method including:
- analyzing the status of each recharging station (14), so as to provide status information for each recharging station (14), depending on whether the recharging station (14) is defective or in good working order,
- transferring, to the railway vehicle (12), status information at least for the closest subsequent recharging station (14ₙ₊₁) in a direction of travel (A) of this vehicle,
- adapting the energy management in the railway vehicle (12), based on the status of said closest following recharging station (14ₙ₊₁), so as to reduce the energy consumption of the railway vehicle (12) when the following recharging station (14ₙ₊₁) is defective in order to reach the recharging station next to the defective station.

8. A railway transportation network (10) on which at least one railway vehicle (12) travels, comprising a plurality of recharging stations (14) for recharging the energy of the railway vehicle (12), the recharging stations (14) being distributed discreetly over the railway transport network, **characterized in that** it includes an energy management system (16) according to any one of claims 1 to 6.
